# EUROPEAN PATENT APPLICATION

(11) **EP 4 029 841 A1**
(43) Date of publication of application: **20.07.2022**
(21) Application number: 20862043.5
(22) Date of filing: 01.09.2020
(51) Int. Cl.: C03C 25/26, C03C 13/00, C03C 25/326, C03C 25/36, C03C 25/40, C08K 3/40, C08K 7/14, C08K 9/06, C08L 63/00, C08L 67/00, C08L 67/02, C08L 75/04, C08L 77/00, C08L 101/00, D06M 13/513, D06M 15/55, D06M 15/564, D06M 101/00

(54) **GLASS FILLER AND RESIN COMPOSITION**

(30) Priority: 13.09.2019 JP 2019167631
(71) Applicant: NIPPON SHEET GLASS COMPANY, LIMITED, Tokyo 108-6321 (JP)
(72) Inventor: KATO, Shinichi, Tokyo 108-6321 (JP)
(74) Representative: Cabinet Beau de Loménie
(86) International application number: PCT/JP2020/033035
(87) International publication number: WO 2021/049370

(57) **Abstract**

A glass filler of the present invention includes: a glass substrate; and a coating film including a surface treatment agent, the coating film covering at least a portion of a surface of the glass substrate. The glass substrate is a glass fiber having a flat cross-sectional shape. For the glass substrate, when a length corresponding to a minor axis of the flat cross-section of the glass fiber is represented by L1, a length corresponding to a major axis of the flat cross-section of the glass fiber is represented by L2, and a length corresponding to a fiber length of the glass fiber is represented by L3, a ratio of an average of L2 to an average of L1, (average of L2)/(average of L1), is 1.5 or more and 8 or less, the average of L1 is 1.0 µm or more and 10 µm or less, an average of L3 is 3 µm or more and less than 80 µm, and an average of L3 is larger than the average of L2. The surface treatment agent includes a silane coupling agent. A proportion of the coating film in the glass filler is 0.05 mass% or more and 2.5 mass% or less.

## Description

### TECHNICAL FIELD

The present invention relates to a glass filler and a resin composition including the glass filler.

### BACKGROUND ART

It is commonly known that a glass fiber, a carbon fiber, mica, a glass bead, a glass flake, or the like is added as a filler to a matrix resin to achieve, for example, reduction in warping and deformation (i.e., improvement in dimensional stability) of resin molded articles and/or enhancement of mechanical strength thereof.

Glass fibers are widely used as resin-reinforcing fillers capable of imparting higher mechanical strength to resin molded articles than flaky glass fillers and spherical glass fillers do. However, molded articles of resins including glass fibers can have a dimensional stability problem such as a higher likelihood of warping. In order to improve dimensional stability of resin molded articles without greatly decreasing mechanical strength thereof, a ground product (milled glass fiber) obtained by grinding a glass fiber is sometimes used as a resin-reinforcing filler. Among milled glass fibers, Patent Literatures 1 and 2 propose the use of, as a filler, a milled glass fiber obtained by grinding a glass fiber having a fiber cross-section in a flat shape instead of a circular shape in order to further improve dimensional stability of resin molded articles.

### CITATION LIST

### Patent Literature

Patent Literature 1: JP H07(1995)-010591 A
Patent Literature 2: JP H07(1995)-018186 A

### SUMMARY OF INVENTION

### Technical Problem

As described above, when included in a resin as a filler, a milled glass fiber having a flat cross-sectional shape can improve both mechanical strength and dimensional stability of a molded article of the resin. Moreover, with a milled glass fiber having a shorter fiber length, dimensional stability of a resin molded article can further be improved and appearance quality of the resin molded article can also be improved. However, shortening the fiber length of a milled glass fiber can make it difficult to achieve the effect of a fibrous glass filler, namely, maintenance of mechanical strength of a resin molded article. Additionally, resin molded articles are required to have improved scratch resistance in addition to further improved dimensional stability and appearance quality. As described above, resin-reinforcing glass fillers are required to achieve resin molded articles having not only mechanical strength but also high dimensional stability, high appearance quality, and high scratch resistance.

It is therefore an object of the present invention to provide a glass filler capable of imparting not only mechanical strength but also high dimensional stability, high appearance quality, and high scratch resistance to a molded article of a resin when included in the resin. Another object of the present invention is to provide a resin composition including such a glass filler in a resin and capable of achieving a resin molded article having not only mechanical strength but also high dimensional stability, high appearance quality, and high scratch resistance.

### Solution to Problem

The present invention provides a glass filler including:
a glass substrate; and
a coating film including a surface treatment agent, the coating film covering at least a portion of a surface of the glass substrate, wherein
the glass substrate is a glass fiber having a flat cross-sectional shape,
for the glass substrate, when a length corresponding to a minor axis of the flat cross-section of the glass fiber is represented by L1, a length corresponding to a major axis of the flat cross-section of the glass fiber is represented by L2, and a length corresponding to a fiber length of the glass fiber is represented by L3, a ratio of an average of L2 to an average of L1, (average of L2)/(average of L1), is 1.5 or more and 8 or less, the average of L1 is 1.0 µm or more and 10 µm or less, an average of L3 is 3 µm or more and less than 80 µm, and an average of L3 is larger than the average of L2,
the surface treatment agent includes a silane coupling agent, and
a proportion of the coating film in the glass filler is 0.05 mass% or more and 2.5 mass% or less.

The present invention also provides a resin composition including: the above glass filler of the present invention; and a matrix resin.

### Advantageous Effects of Invention

When included in a resin, the glass filler of the present invention can impart not only mechanical strength but also high dimensional stability, high appearance quality, and high scratch resistance to a molded article of the resin. Moreover, since including such a glass filler of the present invention, the resin composition of the present invention can achieve a resin molded article having not only mechanical strength but also high dimensional stability, high appearance quality, and high scratch resistance.

### BRIEF DESCRIPTION OF DRAWINGS

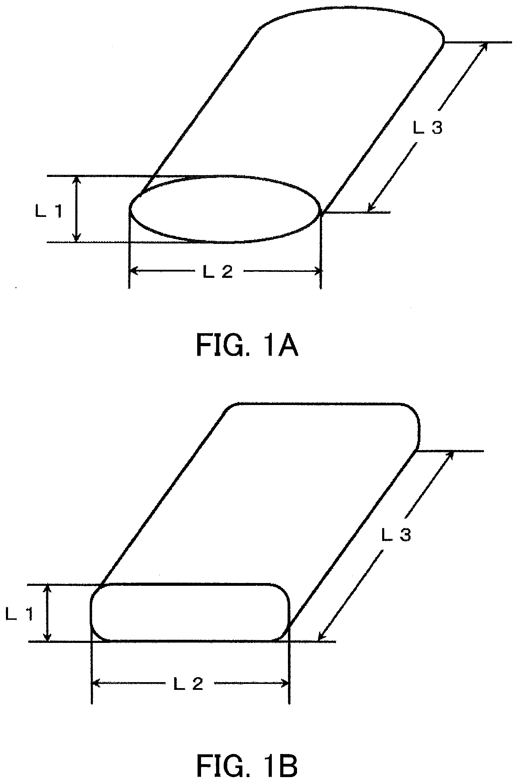

FIG. 1A is a perspective view showing an example of a glass substrate of a glass filler of an embodiment of the present invention.
FIG. 1B is a perspective view showing another example of the glass substrate of the glass filler of the embodiment of the present invention.

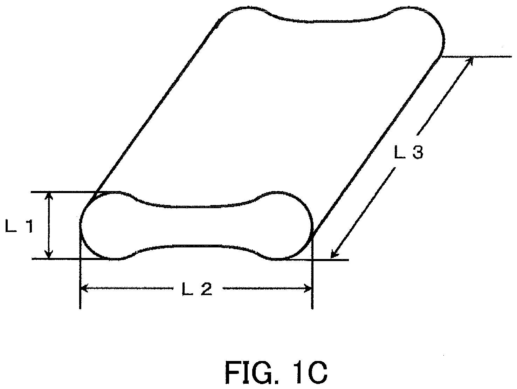

FIG. 1C is a perspective view showing yet another example of the glass substrate of the glass filler of the embodiment of the present invention.

### DESCRIPTION OF EMBODIMENTS

Embodiments of a glass filler of the present invention and a resin composition of the present invention will be described hereinafter.

A glass filler of the present embodiment includes: a glass substrate; and a coating film including a surface treatment agent, the coating film covering at least a portion of a surface of the glass substrate. The glass substrate is a glass fiber having a flat cross-sectional shape. For the glass substrate, when a length corresponding to a minor axis of the flat cross-section of the glass fiber is represented by L1, a length corresponding to a major axis of the flat cross-section of the glass fiber is represented by L2, and a length corresponding to a fiber length of the glass fiber is represented by L3, a ratio of an average of L2 to an average of L1, (average of L2)/(average of L1), is 1.5 or more and 8 or less, the average of L1 is 1.0 µm or more and 10 µm or less, an average of L3 is 3 µm or more and less than 80 µm, and an average of L3 is larger than the average of L2. The surface treatment agent included in the coating film includes a silane coupling agent. A proportion of the coating film in the glass filler of the present embodiment is 0.05 mass% or more and 2.5 mass% or less.

For the glass filler of the present embodiment, the term "cross-section" of the glass fiber refers to a cross-section taken along a direction perpendicular to a fiber axis of the glass fiber. The term "fiber length" of the glass fiber refers to a length of the glass fiber in a direction parallel to the fiber axis of the glass fiber. The term "minor axis of the flat cross-section" refers to the longest length in a thickness direction of the flat cross-sectional shape, i.e., the longest one of lengths in a direction parallel to the shortest portion of the cross-section. The term "major axis of the flat cross-section" refers to the longest length in a direction perpendicular to the minor axis. Having "a flat cross-sectional shape" means that the cross-section as a whole has a flat shape. FIGS. 1A to 1C are perspective views showing examples of the glass substrate of the glass filler of the present embodiment. Examples of the flat cross-sectional shape include a cocoon shape (see FIG. 1A), a ribbon shape (see FIG. 1B), and a dumbbell shape (see FIG. 1C).

For the glass substrate, the average of the length L3 corresponding to the fiber length of the glass fiber is a number average length determined from the result of measuring the lengths L3 corresponding to the fiber lengths of 500 randomly chosen pieces of the glass substrate using an optical microscopy image of the glass substrate. The average of the length L1 corresponding to the minor axis of the flat cross-section of the glass fiber and the average of the length L2 corresponding to the major axis of the flat cross-section of the glass fiber are values obtained by measuring cross-sections of 100 randomly chosen pieces of the glass substrate for the lengths of their minor and major axes as defined above using a scanning electron microscopy (SEM) image and then dividing the total minor axis length and the total major axis length by the number of measured pieces (100).

The glass fiber having a flat cross-sectional shape may be, for example, a ground product of the glass fiber having a flat cross-sectional shape. The case where the glass fiber having a flat cross-sectional shape is a ground product of the glass fiber having a flat cross-sectional shape may hereinafter be taken as an example to describe the glass fiber having a flat cross-sectional shape. However, the glass substrate of the present embodiment only needs to be a glass fiber having the above shape features and is not limited to a ground product of the glass fiber.

A ground product of the glass fiber having a flat cross-sectional shape may hereinafter be referred to as "flat-cross-sectional milled glass fiber". For the glass substrate, the length L1 corresponding to the minor axis of the flat cross-section of the glass fiber and the length L2 corresponding to the major axis of the flat cross-section of the glass fiber may be respectively referred to as "minor axis L1 of the glass substrate" and "major axis L2 of the glass substrate". For the glass substrate, the length L3 corresponding to the fiber length of the glass fiber may be referred to as "length L3 of the glass substrate".

The glass filler of the present embodiment includes, for example, a flat-cross-sectional milled glass fiber as the glass substrate. The shape of the glass substrate is controlled to satisfy the above shape features, which are a ratio (average of L2)/(average of L1) of 1.5 or more and 8 or less, an average of L1 of 1.0 µm or more and 10 µm or less, an average of L3 of 3 µm or more and less than 80 µm, and the average of L3 larger than the average of L2. Since the average of the length L3 of the glass substrate is 3 µm or more and less than 80 µm and the average of L3 is larger than the average of L2, the glass substrate can exhibit its function as a fiber. That is, impartation of a certain level of mechanical strength, which is an effect obtained by using the glass fiber as a filler, can be achieved by the glass substrate. Moreover, since the average of the length L3 of the glass substrate is 3 µm or more and less than 80 µm, the glass filler of the present embodiment can also improve the dimensional stability, appearance quality, and scratch resistance of a resin molded article. Furthermore, since the glass substrate has a flat cross-sectional shape whose minor axis L1 and major axis L2 satisfy the requirements, specifically, a ratio (average of L2)/(average of L1) of 1.5 or more and 8 or less and an average of L1 of 1.0 µm or more and 10 µm or less, the glass substrate can impart high dimensional stability to a resin molded article when used as a resin-reinforcing filler, compared to a milled glass fiber having a circular cross-section or a milled glass fiber having a cross-sectional shape whose minor axis L1 and major axis L2 do not satisfy the above requirements. Standard deviations of L1 and L2 are preferably small, and are preferably 25% or less from the averages of L1 and L2. A standard deviation of L3 is preferably small too. However, because it is difficult to control L3, L3 is, for example, preferably around the average fiber length (namely, the average of L3). The glass filler of the present embodiment not only includes the glass substrate satisfying the above shape features but further includes the coating film covering at least a portion of the surface of the glass substrate. The coating film includes the surface treatment agent including the silane coupling agent, and the proportion of the coating film is 0.05 mass% or more and 2.5 mass% or less in the entire glass filler of the present embodiment. With such a coating film, the glass filler of the present embodiment can improve the mechanical strength, dimensional stability, appearance quality, and scratch resistance of a resin molded article.

As described above, since the glass filler of the present embodiment includes the glass substrate having the specific shape and covered by the coating film including the surface treatment agent, the glass filler of the present embodiment can achieve a resin molded article having a good balance between all of the mechanical strength, dimensional stability, appearance quality, and scratch resistance, particularly a resin molded article having high dimensional stability and high scratch resistance, compared to a conventional milled glass fiber having a circular cross-section or a flat cross-sectional shape and used as a resin-reinforcing filler.

Hereinafter, the glass substrate and the coating film of the glass filler of the present embodiment will be described in more detail.

### (Glass substrate)

The average of the minor axis L1 of the glass substrate is, as described above, 1.0 µm or more and 10 µm or less. The average of the minor axis L1 of the glass substrate is, for example, preferably 1.5 µm or more and more preferably 2.0 µm or more. The average of the minor axis L1 of the glass substrate is, for example, preferably 9.0 µm or less and more preferably 8.0 µm or less. Since the average of the minor axis L1 of the glass substrate is within the above range, the glass filler of the present embodiment can further improve the dimensional stability of a resin molded article while maintaining the mechanical strength thereof.

The average of the major axis L2 of the glass substrate is not particularly limited as long as the average of the major axis L2 of the glass substrate is determined so that (average of L2)/(average of L1) will satisfy 1.5 or more and 8 or less. The average of the major axis L2 of the glass substrate is, for example, preferably 3.0 µm or more and more preferably 5.0 µm or more. The average of the major axis L2 of the glass substrate is, for example, preferably 50 µm or less and more preferably 30 µm or less. When the average of the major axis L2 of the glass substrate is within the above range, the glass filler of the present embodiment can further improve the dimensional stability of a resin molded article while maintaining the mechanical strength thereof.

The ratio (average of L2)/(average of L1) of the average of the major axis L2 of the glass substrate to the average of the minor axis L1 of the glass substrate is, as described above, 1.5 or more and 8 or less. (Average of L2)/(average of L1) is, for example, preferably 2.0 or more and more preferably 2.5 or more. (Average of L2)/(average of L1) is, for example, preferably 7.0 or less and more preferably 6.0 or less. Since (average of L2)/(average of L1) is within the above range, the glass filler of the present embodiment can further improve the dimensional stability of a resin molded article while maintaining the mechanical strength thereof.

The average of the length L3 of the glass substrate is, as described above, 3 µm or more and less than 80 µm. The average of the length L3 of the glass substrate is, for example, preferably 5 µm or more and more preferably 10 µm or more. The average of the length L3 of the glass substrate is, for example, preferably 65 µm or less and more preferably 50 µm or less. Since the average of the length L3 of the glass substrate is within the above range, the glass filler of the present embodiment can further improve the dimensional stability, appearance quality, and scratch resistance of a resin molded article.

The average of the length L3 of the glass substrate is larger than the average of the major axis L2 of the glass substrate. Since the glass substrate has such a shape, the glass substrate exhibits its function as a glass fiber in a clear manner and thus can impart higher mechanical strength to a resin molded article.

Commonly known glass composition can be used as composition of the glass substrate. Specifically, a glass with a low alkali metal oxide content, such as E-glass, can be suitably used. Typical composition of E-glass (a glass composition of a first example) is shown below. That is, the glass substrate may include the glass composition of the first example. The unit is mass% in the composition below.

52 ≤ SiO₂ ≤ 56
12 ≤ Al₂O₃ ≤ 16
16 ≤ CaO ≤ 25
0 ≤ MgO ≤ 6
0 ≤ Na₂O + K₂O ≤ 2
5 ≤ B₂O₃ ≤ 13
0 ≤ F₂ ≤ 0.5

The glass substrate may include, as a glass composition with a low alkali metal oxide content, a glass composition (a glass composition of a second example) having the following composition. The glass composition of the second example includes the following components in mass% and substantially free of B₂O₃, F, ZnO, BaO, SrO, and ZrO₂
59 ≤ SiO₂ ≤ 65;
8 ≤ 5Al₂O₃ ≤ 15;
47 ≤ (SiO₂ - Al₂O₃) ≤ 57;
1 ≤ MgO ≤ 5;
20 ≤ CaO ≤ 30;
0 < (Li₂O + Na₂O + K₂O) < 2; and
0 ≤ TiO₂ ≤ 5.
This glass composition is disclosed by the present applicant in WO 2006/068255 A1.

Being "substantially free" means that the components are not included intentionally except for those inevitably introduced from, for example, industrial materials. Specifically, being "substantially free" means that the content of each of B₂O₃, F, ZnO, BaO, SrO, and ZrO₂ is less than 0.1 mass% (preferably less than 0.05 mass% and more preferably less than 0.03 mass%).

The glass substrate may include the following glass composition (a glass composition of a third example). The glass composition of the third example includes the following components in mass%:
50 ≤ SiO₂ ≤ 54;
25 ≤ B₂O₃ ≤ 30;
12 ≤ Al₂O₃ ≤ 15;
0.5 ≤ MgO ≤ 1.9;
3.0 ≤ CaO ≤ 5.5;
0 ≤ ZnO ≤ 3.5;
0.1 ≤ Li₂O ≤ 0.5; and
0.1 ≤ Na₂O ≤ 0.3, and
the glass composition of the third example has a permittivity of less than 5.0 at a frequency of 1 MHz.

The glass composition of the third example is a low-permittivity glass composition. Because of this, when the glass composition of the third example forms the glass substrate, the glass filler of the present embodiment can be used in applications where the permittivity is required to be reduced, for example, as a resin reinforcing material for a printed-circuit board, a communication device component, etc. Moreover, with the use of the glass composition of the third example, devitrification hardly occurs and entrapment of bubbles is also reduced in spinning of the glass fiber even when the fiber diameter of the glass fiber is small. In the case where the glass composition of the third example forms the glass substrate, occurrence of devitrification and entrapment of bubbles do not impair an inherent performance of the glass substrate, and that improves the reliability of the glass filler of the present embodiment.

The glass substrate may include the following glass composition (a glass composition of a fourth example). The glass composition of the fourth example includes the following components in mass%:
50 ≤ SiO₂ ≤ 56;
20 ≤ B₂O₃ ≤ 30;
10 ≤ Al₂O₃ ≤ 20;
3.5 ≤ MgO + CaO ≤ 10; and
0 ≤ R₂O ≤ 1.0,
the glass composition of the fourth example further includes Fe₂O₃, and the glass composition of the fourth example has a permittivity of less than 5.0 at a frequency of 1 MHz. In the glass composition of the fourth example, R₂O is at least one oxide selected from the group consisting of Li₂O, Na₂O, and K₂O.

The glass composition of the fourth example is a low-permittivity glass composition. Because of this, when the glass composition of the fourth example forms the glass substrate, the glass filler of the present embodiment can be used in applications where the permittivity is required to be reduced, for example, as a resin reinforcing material for a printed-circuit board, a communication device component, etc. Furthermore, with the use of the glass composition of the fourth example, occurrence of fiber breakage in spinning and occurrence of fiber breakage, fuzzing, and the like of the glass fiber in processing are reduced even when the fiber diameter of the glass fiber formed is small. In the case where the glass composition of the fourth example forms the glass substrate, occurrence of fiber breakage and fuzzing do not impair an inherent performance of the glass substrate, and that improves the reliability of the glass filler of the present embodiment.

The glass substrate may include the following glass composition (a glass composition of a fifth example). The glass composition of the fifth example includes the following components in mass%:
40 ≤ SiO₂ ≤ 60;
25 ≤ B₂O₃ ≤ 45;
5 ≤ Al₂O₃ ≤ 15;
0 < R₂O ≤ 5; and
0 < RO < 15.

The glass composition of the fifth example satisfies: SiO₂ + B₂O₃ ≥ 80; and/or SiO₂ + B₂O₃ ≥ 78 and 0 < RO < 10. In the glass composition of the fifth example, R₂O is at least one oxide selected from the group consisting of Li₂O, Na₂O, and K₂O, and RO is at least one oxide selected from the group consisting of MgO, CaO, and SrO.

The glass composition of the fifth example is a low-permittivity glass composition. Because of this, when the glass composition of the fifth example forms the glass substrate, the glass filler of the present embodiment can be used in applications where the permittivity is required to be reduced, for example, as a resin reinforcing material for a printed-circuit board, a communication device component, etc. Furthermore, because the glass composition of the fifth example is a glass composition suitable for mass manufacturing, the glass filler of the present embodiment is easily mass-manufactured.

It is preferable that the glass composition of the fifth example have a permittivity of 4.4 or less at a frequency of 1 GHz, and a temperature T2 at which a viscosity of the glass composition of the fifth example be 10² dPas is 1700°C or lower.

The glass substrate may include the following glass composition (a glass composition of a sixth example). The glass composition of the sixth example includes the following components in mass%:
40 ≤ SiO₂ ≤ 60;
25 ≤ B₂O₃ ≤ 45;
0 < Al₂O₃ ≤ 18;
0 < R₂O ≤ 5; and
0 ≤ RO ≤ 12.

In the glass composition of the sixth example, at least one of
i) SiO₂ + B₂O₃ ≥ 80 and SiO₂ + B₂O₃ + Al₂O₃ ≤ 99.9, and
ii) SiO₂ + B₂O₃ ≥ 78, SiO₂ + B₂O₃ + Al₂O₃ ≤ 99.9, and 0 < RO < 10
is established. In the glass composition of the sixth example, R₂O is at least one oxide selected from the group consisting of Li₂O, Na₂O, and K₂O, and RO is at least one oxide selected from the group consisting of MgO, CaO, and SrO.

The glass composition of the sixth example is a low-permittivity glass composition. Because of this, when the glass composition of the sixth example forms the glass substrate, the glass filler of the present embodiment can be used in applications where the permittivity is required to be reduced, for example, as a resin reinforcing material for a printed-circuit board, a communication device component, etc. Furthermore, because the glass composition of the sixth example is a glass composition suitable for mass manufacturing, the glass filler of the present embodiment is easily mass-manufactured.

It is preferable that the glass composition of the sixth example have a permittivity of 4.4 or less at a frequency of 1 GHz, and a temperature T2 at which a viscosity of the glass composition of the sixth example be 10² dPas is 1700°C or lower.

The glass substrate may include the following glass composition (a glass composition of a seventh example). The glass composition of the seventh example includes the following components in mass%:
40 ≤ SiO₂ ≤ 60;
25 ≤ B₂O₃ ≤ 45;
0 < Al₂O₃ ≤ 18;
0 < R₂O ≤ 5; and
3 < RO < 8.

In the glass composition of the seventh example, SiO₂ + B₂O₃ ≥ 75 and SiO₂ + B₂O₃ + Al₂O₃ < 97 are established. In the glass composition of the seventh example, R₂O is at least one oxide selected from the group consisting of Li₂O, Na₂O, and K₂O, and RO is at least one oxide selected from the group consisting of MgO, CaO, and SrO.

The glass composition of the seventh example is a low-permittivity glass composition. Because of this, when the glass composition of the seventh example forms the glass substrate, the glass filler of the present embodiment can be used in applications where the permittivity is required to be reduced, for example, as a resin reinforcing material for a printed-circuit board, a communication device component, etc. Furthermore, because the glass composition of the seventh example is a glass composition suitable for mass manufacturing, the glass filler of the present embodiment is easily mass-manufactured.

The glass substrate may include the following glass composition (a glass composition of an eighth example). In the glass composition of the eighth example, SiO₂ + B₂O₃ ≥ 77 is established in mass%. The glass composition of the eighth example has a permittivity of 4.4 or less at a frequency of 1 GHz, and a temperature T2 at which a viscosity of the glass composition of the eighth example is 10² dPas is 1700°C or lower.

The glass composition of the eighth example is a low-permittivity glass composition. Because of this, when the glass composition of the eighth example forms the glass substrate, the glass filler of the present embodiment can be used in applications where the permittivity is required to be reduced, for example, as a resin reinforcing material for a printed-circuit board, a communication device component, etc. Furthermore, because the glass composition of the eighth example is a glass composition suitable for mass manufacturing, the glass filler of the present embodiment is easily mass-manufactured.

The glass substrate may include the following glass composition (a glass composition of a ninth example). The glass composition of the ninth example includes the following components in mass%:
95 ≤ SiO₂ ≤ 99.5;
0 ≤ B₂O₃ ≤ 2;
0.01 ≤ Al₂O₃ ≤ 4;
0 ≤ R₂O ≤ 4;
0.01 ≤ RO' ≤ 4; and
0 ≤ TiO₂ ≤ 4.

In the glass composition of the ninth example, R₂O is at least one oxide selected from the group consisting of Li₂O, Na₂O, and K₂O, and RO' is at least one oxide selected from the group consisting of MgO, CaO, SrO, and ZnO.

The glass composition of the ninth example is a low-permittivity glass composition. Because of this, when the glass composition of the ninth example forms the glass substrate, the glass filler of the present embodiment can be used in applications where the permittivity is required to be reduced, for example, as a resin reinforcing material for a printed-circuit board, a communication device component, etc.

Next, a method for manufacturing the glass substrate will be described. Here, the case where the glass substrate is a flat-cross-sectional milled glass fiber is taken as an example to describe an exemplary method for manufacturing the glass substrate.

First, a glass fiber having a flat cross-sectional shape is produced. For the glass fiber to be produced, the minor axis of a fiber cross-section is the same as the minor axis L1 of the above glass substrate, and the major axis of a fiber cross-section is the same as the major axis L2 of the above glass substrate. Detailed descriptions are therefore omitted.

The glass fiber having a flat cross-sectional shape can be produced by a known method, as described in, for example, JP H6(1994)-228806 A, for manufacturing a glass fiber having a flat cross-sectional shape. For example, a glass fiber having a cross-sectional shape whose minor axis and major axis satisfy the requirements defined in the present embodiment can be manufactured by allowing molten glass to flow out through a nozzle tip for spinning a flat-cross-sectional glass fiber, the nozzle tip, as described in JP H6(1994)-228806 A, having one orifice or a plurality of orifices and being provided with a plurality of projecting edges extending downward from a periphery of an end of the nozzle tip. By this method, a glass fiber having a cross-sectional shape having a desired shape and size can be produced by adjusting the shape and size of the nozzle tip. That is, desired averages of the minor axis L1 and the major axis L2 of the glass substrate can be obtained by adjusting the shape and size of the nozzle tip.

Next, the obtained glass fiber is ground, for example, using a ball mill. A flat-cross-sectional milled glass fiber can be obtained thereby. The length L3 of the obtained glass substrate can be adjusted by changing conditions for grinding the glass fiber. The technique employed to adjust the length of the glass fiber is not limited to grinding using a ball mill, and another technique or a combination of a plurality of techniques can be employed. For example, the glass substrate of the present embodiment can be produced by using one of an impact crusher, a gyratory crusher, a cone crusher, a jaw crusher, a roll crusher, a cutter mill, an autogenous mill, a stamp mill, a stone mill, a mortar machine, a ring mill, a roller mill, a jet mill, a hammer mill, a pin mill, a tumbling mill, a vibration mill, a planetary mill, an attritor, and a bead mill, or by using two or more of these in appropriate combination. Another grinding technique, for example, flame crushing (burner crushing) and/or blow crushing (high-pressure gas crushing) may be employed instead of or in conjunction with the above various grinding techniques.

### (Coating film)

The coating film covers at least a portion of the surface of the glass substrate. The coating film preferably covers the entire surface of the glass substrate to more reliably achieve the effect exhibited by the coating film. The effect is, in other words, to reduce occurrence of warping of a resin molded article to improve the dimensional stability thereof while the mechanical strength thereof is maintained.

As described above, the coating film includes the surface treatment agent including the silane coupling agent. The coating film preferably consists essentially of the surface treatment agent and may consist of the surface treatment agent. Saying that the coating film consists essentially of the surface treatment agent means that the content of the surface treatment agent included in the coating film is 70 mass% or more and preferably 80 mass% or more. The coating film may include, for example, inorganic fine particles such as fine silica particles in addition to the surface treatment agent.

Examples of the silane coupling agent include γ-aminopropyltriethoxysilane, γ-aminopropyltrimethoxysilane, bis(3-triethoxysilylpropyl)amine, γ-ureidopropyltriethoxysilane, γ-glycidoxypropyltrimethoxysilane, vinyltriethoxysilane, and γ-methacryloxypropyltrimethoxysilane. The silane coupling agent preferably has an amino group or a glycidyl group. Compared to a surface treatment agent including a silane coupling agent other than the silane coupling agent having an amino group or a glycidyl group, the surface treatment agent including the silane coupling agent having an amino group or a glycidyl group improves compatibility between the glass and a matrix resin and causes a reaction of the silane coupling agent with the glass and the matrix resin to improve adhesiveness at an interface between the glass filler and the matrix resin. Therefore, among the silane coupling agents shown above as examples, γ-aminopropyltriethoxysilane, γ-aminopropyltrimethoxysilane, bis(3-triethoxysilylpropyl)amine, and γ-glycidoxypropyltrimethoxysilane are suitably used. Besides the silane coupling agent, a titanium coupling agent, an aluminum coupling agent, a zirconia coupling agent, and the like can also be used.

The surface treatment agent may further include a resin. The resin included in the surface treatment agent is not limited to a particularly one, and, for example, a glycidyl group-containing resin or a urethane resin is suitably used. That is, the resin included in the surface treatment agent may include a glycidyl group-containing resin or a urethane resin. When the surface treatment agent includes the glycidyl group-containing resin, a reaction between the glycidyl group and a matrix resin can be expected. When the surface treatment agent includes the urethane resin, high compatibility between the urethane resin and a matrix resin can be expected and improvement in adhesiveness at an interface between the glass filler and the matrix resin can also be expected.

Examples of the glycidyl group-containing resin include a bisphenol A epoxy resin, a bisphenol F epoxy resin, a bisphenol AD epoxy resin, a phenol novolac epoxy resin, O-cresol novolac epoxy resin, and a hydrogenated bisphenol A epoxy resin.

The urethane resin is a polymer made by copolymerization of a polyol component and a polyisocyanate component. The polyisocyanate component includes aliphatic, alicyclic, aromatic, and aromatic-aliphatic polyisocyanates, and is not limited to a particular one. For example, among aliphatic polyisocyanates, hexamethylene diisocyanate is suitably used. Among alicyclic polyisocyanates, isophorone diisocyanate and hydrogenated xylylene diisocyanate are suitably used. Examples of the polyol component includes polyetherpolyol, polyesterpolyol, polytetramethylene glycol, polybutadienepolyol, polyisoprenepolyol, aminepolyol, castor oil, and its derivatives, but the polyol component is not particularly limited.

The glycidyl group-containing resin or the urethane resin may be used alone as the resin included in the surface treatment agent. That is, the resin included in the surface treatment agent may be the glycidyl group-containing resin alone or the urethane resin alone. A plurality of resins may be used in combination as the resin included in the surface treatment agent. For example, the glycidyl group-containing resin or the urethane resin may be used in combination with an additional resin, or the glycidyl group-containing resin and the urethane resin may be used in combination.

The surface treatment agent may further include a crosslinking agent, a surfactant and/or a lubricant in addition to the silane coupling agent and the resin.

The content of the silane coupling agent is, for example, preferably 0.1 mass% or more, more preferably 1.0 mass% or more, and even more preferably 5.0 mass% or more in the surface treatment agent. When the content of the silane coupling agent in the surface treatment agent is within this range, the glass filler of the present embodiment can further improve the dimensional stability of a resin molded article. The surface treatment agent may consist of the silane coupling agent. That is, the content of the silane coupling agent may be 100 mass% in the surface treatment agent.

The surface treatment agent may or may not include the resin. When the surface treatment agent includes the resin, the content of the resin is, for example, preferably 30 mass% or more and more preferably 40 mass% or more in the surface treatment agent. The content of the resin is, for example, preferably 99.9 mass% or less and more preferably 95 mass% or less in the surface treatment agent. When the content of the resin in the surface treatment agent is within this range, the glass filler of the present embodiment can further improve the dimensional stability of a resin molded article.

The coating film may be produced, for example, as described later, using a solution containing the materials of the coating film including the surface treatment agent. When the solution used is an aqueous solution, the resin may be an emulsion. When the resin is an emulsion, a surfactant in an amount necessary for emulsification may be included without affecting properties of the resin. For example, the content of the surfactant added may be about 1 to 10 mass% on the basis of the mass of the resin used, although the content varies depending on the properties of the resin.

The proportion of the coating film in the glass filler of the present embodiment is 0.05 mass% or more and 2.5 mass% or less. Since the proportion of the coating film is within this range, the glass filler of the present embodiment can reduce occurrence of warping of a resin molded article and achieve higher dimensional stability thereof. The proportion of the coating film is preferably 0.08 mass% or more in the entire glass filler. When the proportion of the coating film is 0.08 mass% or more, the surface of the glass substrate can be sufficiently covered by the coating film. Consequently, the glass filler of the present embodiment can further improve the mechanical strength of a resin molded article and can also improve the dimensional stability thereof. The proportion of the coating film is preferably 2.0 mass% or less in the entire glass filler. When the proportion of the coating film is 2.0 mass% or less, bonding strength between the glass fillers is not too strong, and the glass fillers can therefore be uniformly dispersed in a resin molded article to improve the mechanical strength of the resin molded article. Additionally, when the proportion of the coating film is 2.0 mass% or less, the content of each component of the coating film is not too high to reduce adhesiveness between the glass filler and a matrix resin, and therefore the dimensional stability of a resin molded article is further improved.

The method for covering the surface of the glass substrate with the coating film is not limited to a particular one, and a known method can be used. The glass filler in which at least a portion of the surface of the glass substrate is covered by the coating film can be formed, for example, by adding a solution (coating film material solution) containing the materials of the coating film including the surface treatment agent onto the glass substrate, and stirring and drying the mixture. The method for accomplishing the addition, stirring, and drying of the coating film material solution is not limited to a specific one. Examples of the method will be described hereinafter.

For example, the glass substrate is fluidized in a mixer such as a rotary disk mixer or a Henschel mixer having a mixing vessel equipped with a rotating blade, a predetermined amount of the coating film material solution is added onto the flowing glass substrate by a means such as a spray, and the glass substrate and the coating film material solution are mixed and stirred. Then, the glass substrate on which the coating film material solution is attached is dried under stirring in the mixer, or the glass substrate on which the coating film material solution is attached is taken out of the mixer and dried. In this manner, the glass filler including the glass substrate covered by the coating film can be obtained.

In another example, the glass filler including the glass substrate covered by the coating film can be produced by tumbling granulation as described in JP H02(1990)-124732 A. That is, granulation may be performed by placing the glass substrate in a horizontal oscillating granulator equipped with a stirring blade and spraying the coating film material solution onto the glass substrate.

The glass filler including the glass substrate covered by the coating film can be produced also by using known methods other than the above examples, such as methods generally called stirring granulation, fluidized bed granulation, injection granulation, and rotary granulation.

The drying step is accomplished, for example, by heating the glass substrate on which the coating film material solution is attached to a temperature equal to or higher than the boiling point of the solvent used in the coating film material solution and drying the glass substrate until the solvent fully evaporates.

The proportion of the coating film in the glass filler can be controlled by adjusting the concentration of the coating film materials in the coating film material solution to be added or sprayed. That is, a glass filler having a predetermined proportion of the coating film can be produced by adding or spraying a predetermined amount of the coating film material solution onto a predetermined amount of the glass substrate so that a predetermined amount of the coating film materials will be on the glass substrate.

Next, a resin composition of the present embodiment will be described.

The resin composition of the present embodiment includes the above glass filler of the present embodiment and a matrix resin. Since the resin composition of the present embodiment includes the glass filler of the present embodiment, the resin composition of the present embodiment can achieve a resin molded article having both high mechanical strength and high dimensional stability.

The matrix resin is not limited to a particularly one, and may be a thermoplastic resin or a thermosetting resin.

Examples of the thermosetting resin include an epoxy resin, a phenolic resin, an unsaturated polyester resin, a urea resin, a melamine resin, a diallyl phthalate resin, a silicon resin, a vinyl ester resin, a polyurethane resin, a polyimide resin, a bismaleimide resin, a thermosetting acrylic resin, and a curable mixture of any of these resins.

The thermoplastic resin is, for example:
at least one selected from the group consisting of a polyolefin, a polyester, a polycarbonate, a polyvinyl chloride, a polystyrene, a polyamide, a polyphenylene sulfide, a polyphenylene ether, a polyetherketone, an acrylic resin, and a liquid crystal polymer; or
a copolymer or a polymer alloy including at least two selected from the group consisting of a polyolefin, a polyester, a polycarbonate, a polyvinyl chloride, a polystyrene, a polyamide, a polyphenylene sulfide, a polyphenylene ether, a polyetherketone, an acrylic resin, and a liquid crystal polymer.

Examples of the polyolefin include polybutylene, polypropylene, and polyethylene. Examples of the polyester include a thermoplastic polyester such as polybutylene terephthalate. Examples of the polyamide include polyamide 66. Examples of the polyetherketone include polyetheretherketone. Examples of the acrylic resin include polymethyl methacrylate.

When the matrix resin is the thermoplastic resin, the resin composition of the present embodiment more easily achieves a resin molded article having a good balance between all of the mechanical strength, dimensional stability, appearance quality, and scratch resistance, particularly a resin molded article having high dimensional stability and high scratch resistance.

When the matrix resin includes the thermoplastic resin, the thermoplastic resin may include the polyamide (e.g., polyamide 66), the thermoplastic polyester (e.g., polybutylene terephthalate), and/or the polycarbonate. The resin composition of the present embodiment more easily achieves a resin molded article having a good balance between all of the mechanical strength, dimensional stability, appearance quality, and scratch resistance, particularly a resin molded article having high dimensional stability and high scratch resistance, particularly in the case of using the polyamide, the thermoplastic polyester and/or the polycarbonate as the matrix resin, because, in that case, the reinforcing effect, dimension stabilizing effect, appearance quality improving effect, and scratch resistance improving effect of the glass filler of the present embodiment on the matrix resin is more likely to be obtained.

A proportion of the glass filler in the resin composition is preferably 10 mass% or more and 70 mass% or less. Controlling the proportion of the glass filler to 10 mass% or more allows the glass filler to fully exhibit its function as a reinforcing material. Controlling the proportion of the glass filler to 70 mass% or less makes it possible to uniformly disperse the glass filler in the resin composition. The content of the glass filler is more preferably 15 mass% or more and 60 mass% or less to further improve the mechanical strength and dimensional stability of a resin molded article.

The resin composition may include an additional component other than the matrix resin and the glass filler. Examples of the additional component include a filler, such as carbon black, and thermoplastic elastomers. Examples of the thermoplastic elastomers include an olefin elastomer, a styrene elastomer, and a hydrogenated polymer elastomer. Examples of the olefin elastomer include ethylene-α-olefin copolymer elastomers (such as an ethylene-propylene copolymer elastomer (EPR), an ethylene-butene copolymer elastomer (EBR), an ethylene-hexene copolymer elastomer (EHR), and an ethylene-octene copolymer elastomer (EOR)) and ethylene-α-olefin-diene terpolymer elastomers (such as an ethylene-propylene-ethylidene norbornene copolymer, an ethylene-propylene-butadiene copolymer, and an ethylene-propylene-isoprene copolymer). Two or more thermoplastic elastomers can be used in combination.

### EXAMPLES

Hereinafter, the present invention will be described in more detail using examples. The present invention is not limited to the examples given below.

### [Example 1]

### (Glass substrate)

First, a glass fiber was produced using an E-glass having composition shown in Table 1 below. Specifically, the E-glass was put in a melting furnace heated to 1200°C or higher to be molten. The obtained molten glass was allowed to flow out through a nozzle tip for spinning a flat-cross-sectional glass fiber to produce a glass fiber, the nozzle tip having a shape as shown in FIG. 4 of JP H6(1994)-228806 A. The obtained glass fiber had a flat cross-sectional shape whose minor axis was 7 µm and major axis was 28 µm. The obtained glass fiber was ground using a ball mill to produce pieces of a flat-cross-sectional milled glass fiber, which was employed as pieces of a glass substrate. The minor axis L1 and major axis L2 of the glass substrate were the same as the minor axis, 7 µm, and the major axis, 28 µm, of the glass fiber yet to be ground. That is, the minor axes L1 and the major axes L2 of cross-sections of any 100 pieces of the obtained glass substrate were measured using a SEM image showing the cross-sections. It turned out that the minor axes L1 were 7 µm and the major axes L2 were 28 µm. That means the average of the minor axis L1 and that of the major axis L2 of the glass substrate of this Example were respectively 7 µm and 28 µm. Moreover, the lengths L3 of any 500 pieces of the obtained glass substrate were measured using an optical microscopy image showing the glass substrate. The number average length of the length L3 of the glass substrate was determined from the measurement results. The number average length of the length L3 of the glass substrate was 30 µm.

**[Table 1]**

| | (Unit: mass%) |
|---|---|
| | E-glass |
| SiO₂ | 54.7 |
| Al₂O₃ | 14.0 |
| CaO | 23.4 |
| MgO | 0.3 |
| Na₂O | 0.4 |
| K₂O | 0.2 |
| B₂O₃ | 5.8 |
| Others | 1.2 |

Next, 5 kg of the glass substrate was placed in a Henschel mixer. While a surface treatment agent solution was being added by spraying, the content of the mixer was mixed and stirred for 15 minutes. In this Example, the surface treatment agent solution was used as the coating film material solution to form the coating film consisting of the surface treatment agent. The surface treatment agent solution contained, as components of the surface treatment agent (solids), a glycidyl group-containing resin (what is called an epoxy resin, specifically, a solid phenol novolac epoxy resin) serving as the resin and γ-aminopropyltriethoxysilane serving as the silane coupling agent. The solvent of the surface treatment agent solution was water. Subsequently, the glass substrate (undried) on which the surface treatment agent solution was attached was taken out of the mixer and dried by a dryer at 125°C for 8 hours. A glass filler of Example 1 was thus obtained. Since the solution prepared in this Example was an aqueous solution, the resin used was an emulsion. That is, the resin used included a surfactant for emulsification without affecting properties of the resin (in an amount of 2 mass%).

The proportion of the coating film in the obtained glass filler was examined by loss on ignition. Specifically, a proper amount of the glass filler was dried at 110°C, and then heated in an atmosphere at 625°C to remove the coating film from a surface of the glass filler. The proportion of the coating film in the glass filler was calculated from the difference between the mass of the glass filler before the heating and the mass of the glass filler after the heating (i.e., the mass of the glass substrate). That is, the content of the glycidyl group-containing resin was 50 mass% and that of the silane coupling agent was 50 mass% in the coating film. Table 2 shows the results.

### (Resin molded article)

The glass filler of Example 1 and polyamide 66 (AMILAN 3001N manufactured by Toray Industries, Inc.) were mixed uniformly such that the contents of the glass filler of Example 1 and the polyamide 66 were 30 mass% and 70 mass%, respectively. The resulting mixture was kneaded by an extrusion molding machine (KZW15-30 MG manufactured by Technovel Corporation, molding temperature: about 270 to 290°C) to obtain a resin composition including the glass filler and the polyamide 66 serving as the matrix resin. The resin composition was molded by an injection molding machine (HM7 manufactured by NISSEI PLASTIC INDUSTRIAL CO., LTD.) to obtain a resin molded article. The content of the glass filler in the obtained resin molded article was 30 mass%.

Properties of the resin molded article were examined.

To examine the mechanical strength of the resin molded article, the maximum tensile strength was measured. The maximum tensile strength was measured according to JIS K 7113. Table 2 shows the measurement result.

The dimensional stability of the resin molded article was evaluated by measurement of a warping amount of the resin molded article. A 30 mm square and 0.5 mm thick flat plate was molded as a resin molded article for measurement of warping. Five thus-obtained flat plates were each placed on a plane and was supported at one point. The supporting point on the plane and a position at which warping of the flat plate was greatest were located, and the distance between the supporting point and the position was measured. The average of measurement values obtained from the five flat plates was employed as the warping amount. Table 2 shows the measurement result.

The appearance quality of the resin molded article was evaluated using a resin molded article molded into a flat plate. A 30 mm square and 3.0 mm thick flat plate was molded as a resin molded article. A surface of the flat plate was visually observed under sunlight and the appearance thereof was evaluated. In Table 2, "A" represents a molded article surface on which the glass filler is not present, which has smoothness, and which does not glitter, "B" represents a molded article surface which has slightly inferior smoothness and which glitters a little, "C" represents a molded article surface which has inferior smoothness and which glitters a little, and "D" represents a molded article surface which has no smoothness and which glitters.

The scratch resistance of the resin molded article was evaluated using a resin molded article molded into a flat plate. A 30 mm square and 3.0 mm thick flat plate was molded as a resin molded article. A metallic needle placed on the flat plate perpendicularly was dragged at 1 cm/sec under a constant load (20 N), and the degree of scratching was checked visually and tactually. The resin molded article of Example 1 and resin molded articles of later-described Examples 2 and 3 and Comparative Examples 1 to 11 were subjected to the same scratching test and comparatively evaluated. A resin molded article with the least severe scratch was given 5 points, and a resin molded article with the most severe scratch was given 1 point. Table 2 shows the measurement results.

The resin composition was subjected to injection molding 20 times in a row using a mold for a 30 mm square and 3.0 mm thick flat plate. After that, the mold was visually observed for fouling and cloudiness and the degree of fouling was evaluated. The degree of mold fouling depends on the proportion of the coating film in the glass filler, namely, the amount of an organic substance attached on the mold, and the types of the materials of the surface treatment agent. Mold fouling occurs as a result of decomposition of the organic substance in the coating film, the decomposition being caused by heat from a molding machine and by frictional heat generated by kneading. Mold fouling easily occurs particularly when the proportion of the coating film is high. In Table 2, "C" represents the mold suffering fouling, "B" represents the mold on which fouling was scarcely seen, and "A" represents the mold suffering no fouling.

### [Example 2]

A glass filler of Example 2 was produced in the same manner as in Example 1, except that the number average length of the length L3 of the glass substrate was changed to 50 µm by changing the crushing conditions of the glass fiber. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Example 3]

A glass filler of Example 3 was produced in the same manner as in Example 1, except that the surface treatment agent consisted of the silane coupling agent, that is, the coating film consisted of the silane coupling agent, and the concentration of the surface treatment agent in the surface treatment agent solution was changed. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Example 1]

A glass substrate was produced in the same manner as in Example 1. The glass substrate was employed as a glass filler of Comparative Example 1 without subjecting the glass substrate to surface treatment, i.e., without forming a coating film on the glass substrate. A resin composition was produced in the same manner as in Example 1, and then a resin molded article was obtained. The properties of the resin molded article were measured in the same manner as in Example 1. Table 2 shows the results.

### [Comparative Example 2]

A glass substrate was produced in the same manner as in Example 2. The glass substrate was employed as a glass filler of Comparative Example 2 without subjecting the glass substrate to surface treatment, i.e., without forming a coating film on the glass substrate. A resin composition was produced in the same manner as in Example 1, and then a resin molded article was obtained. The properties of the resin molded article were measured in the same manner as in Example 1. Table 2 shows the results.

### [Comparative Example 3]

A glass filler of Comparative Example 3 was produced in the same manner as in Example 1, except that a glass substrate produced in the same manner as in Example 2 was used and the concentration of the surface treatment agent in the surface treatment agent solution was changed. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Example 4]

A glass filler of Comparative Example 4 was produced in the same manner as in Example 1, except that the number average length of the length L3 of the glass substrate was changed to 110 µm by changing the crushing conditions of the glass fiber. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Example 5]

A glass filler of Comparative Example 5 was produced in the same manner as in Example 1, except that the number average length of the length L3 of the glass substrate was changed to 145 µm by changing the crushing conditions of the glass fiber. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Examples 6 to 8]

Glass fillers of Comparative Examples 6 to 9 were produced in the same manner as in Comparative Example 5, except that the concentration of the surface treatment agent in the surface treatment agent solution was changed. Then, the proportion of the coating film in the glass filler was measured in the same manner as in Example 1. Additionally, resin compositions were produced in the same manner as in Example 1, and then resin molded articles were obtained. The properties of the resin molded articles were measured in the same manner as in Example 1. Table 2 shows the results.

### [Comparative Example 9]

A glass filler of Comparative Example 9 was produced in the same manner as in Comparative Example 5, except that the resin in the surface treatment agent, namely, the resin in the coating film, was changed from the glycidyl group-containing resin to a urethane resin. Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Example 10]

A glass filler of Comparative Example 10 was produced in the same manner as in Example 1, except that the glass substrate of Example 1 was changed to a glass flake substrate (having an average particle diameter of 160 µm and an average thickness of 5 µm). Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

### [Comparative Example 11]

A glass filler of Comparative Example 11 was produced in the same manner as in Example 1, except that the glass substrate of Example 1 was changed to a glass flake substrate (having an average particle diameter of 160 µm and an average thickness of 0.7 µm). Then, the proportion of the coating film in the glass filler was measured in the same manner as in Example 1. Additionally, a resin composition was produced in the same manner as in Example 1, and then a resin molded article was obtained. The properties of the resin molded article were measured in the same manner as in Example 1. Table 2 shows the results.

**[Table 2]**

| | | Example | | | Comparative Example | | | | | | | | | | |
|---|---|---|---|---|---|---|---|---|---|---|---|---|---|---|---|
| | | 1 | 2 | 3 | 1 | 2 | 3 | 4 | 5 | 6 | 7 | 8 | 9 | 10 | 11 |
| Glass substrate | | | | | | | | | | | | | | | |
| Average of L1 (minor axis) | µm | 7 | 7 | 7 | 7 | 7 | 7 | 7 | 7 | 7 | 7 | 7 | 7 | | |
| Average of L2 (major axis) | µm | 28 | 28 | 28 | 28 | 28 | 28 | 28 | 28 | 28 | 28 | 28 | 28 | | |
| Average of L2/average of L1 | | 4 | 4 | 4 | 4 | 4 | 4 | 4 | 4 | 4 | 4 | 4 | 4 | | |
| Number average length of L3 (length of glass substrate) | µm | 30 | 50 | 30 | 30 | 50 | 50 | 110 | 145 | 145 | 145 | 145 | 145 | | |
| Thickness (glass flake) | µm | | | | | | | | | | | | | 5 | 0.7 |
| Average particle diameter (glass flake) | µm | | | | | | | | | | | | | 160 | 180 |
| Coating film | | | | | | | | | | | | | | | |
| Proportion of coating film In glass filler | mass % | 0.60 | 0.60 | 0.30 | 0 | 0 | 4.50 | 0.60 | 0.60 | 0.18 | 1.40 | 4.50 | 0.60 | 0.60 | 0.60 |
| Content of silane coupling agent In coating film | mass % | 50 | 50 | 100 | | | 50 | 50 | 50 | 50 | 50 | 50 | 50 | 50 | 50 |
| Content of resin (glycldyl group-containing resin) In coating film | mass % | 50 | 50 | 0 | | | 50 | 50 | 50 | 50 | 50 | 50 | 0 | 50 | 50 |
| Content of resin (urethane resin) In coating film | mass % | 0 | 0 | 0 | | | 0 | 0 | 0 | 0 | 0 | 0 | 50 | 0 | 0 |
| Content of silane coupling agent In glass filler (calculated value) | mass % | 0.30 | 0.30 | 0.30 | | | 2.25 | 0.30 | 0.30 | **0.08** | 0.60 | 2.25 | 0.30 | 0.30 | 0.30 |
| Matrix resin:polyamide 88 | | | | | | | | | | | | | | | |
| Warping amount | mm | 0.45 | 0.51 | 0.55 | 0.58 | 0.71 | 1.07 | 0.73 | **0.88** | 1.22 | 0.97 | 1.44 | 1.24 | 0.68 | 0.35 |
| Tensile strength | MPa | 74 | 81 | 71 | 59 | 65 | 89 | 115 | 120 | 118 | 121 | 109 | 107 | 89 | 123 |
| Appearance quality | | A | B | B | B | C to B | D | C | C | C | C | D | C | D | C to D |
| Scratch resistance | | 5.0 | 4.5 | 4.5 | 4.0 | 3.5 | 3.5 | 3.0 | 2.5 | 2.5 | 2.5 | 3.0 | 2.5 | 1.0 | 2.5 |
| Mold fouling | | A | A | A | A | A | C | A | A | A | B to A | C | A | A | A |

As shown in Table 2, the resin molded articles produced using the glass fillers of Examples 1 to 3 have a warping amount of 0.45 to 0.55 mm. This means that the dimensional stabilities thereof are so high that the dimensional stabilities thereof are the same as or higher than that of the resin molded article (Comparative Example 10) produced using the 5 µm thick glass flake substrate, although being inferior to that of the resin molded article (Comparative Example 11) produced using the very thin glass flake substrate having a thickness of 0.7 µm. Moreover, the resin molded articles produced using the glass fillers of Examples 1 to 3 have higher dimensional stabilities than those of the resin molded articles produced using the glass fillers (Comparative Examples 4 to 9) each having the same flat cross-sectional shape as in Examples 1 to 3 but including the glass substrate whose number average length of the length L3 is 80 µm or more, the glass fillers (Comparative Examples 1 and 2) each including the glass substrate whose number average length of the length L3 is less than 80 µm but provided with no coating film, and the glass filler (Comparative Example 3) in which the proportion of the coating film exceeds 2.5 mass%. Furthermore, although the resin molded articles produced using the glass fillers of Examples 1 to 3 have slightly lower tensile strengths than those of the resin molded articles produced using the glass fillers of Comparative Example 3 to 11, the resin molded articles produced using the glass fillers of Examples 1 to 3 have higher tensile strengths than the resin molded articles produced using the glass fillers of Comparative Examples 1 and 2 and thus can be considered to have sufficient mechanical strengths. Additionally, the resin molded articles produced using the glass fillers of Examples 1 to 3 have higher appearance quality and higher scratch resistance than those of the resin molded articles produced using the glass fillers of Comparative Examples 1 to 11. These reveal that the glass fillers of Examples 1 to 3 can achieve a resin molded article having a good balance between all of the mechanical strength, dimensional stability, appearance quality, and scratch resistance, particularly a resin molded article having high dimensional stability and high scratch resistance.

### INDUSTRIAL APPLICABILITY

A molded article of a resin composition including the glass filler of the present invention is suitably used, for example, in fields of interiors and exteriors of electric and electronic parts, the interiors and exteriors requiring dimensional stability, scratch resistance, and strength. More specifically, such a molded article can be applied to an electric and electronic devices and automobile materials.

## Claims

1. A glass filler comprising:
a glass substrate; and
a coating film including a surface treatment agent, the coating film covering at least a portion of a surface of the glass substrate, wherein
the glass substrate is a glass fiber having a flat cross-sectional shape,
for the glass substrate, when a length corresponding to a minor axis of the flat cross-section of the glass fiber is represented by L1, a length corresponding to a major axis of the flat cross-section of the glass fiber is represented by L2, and a length corresponding to a fiber length of the glass fiber is represented by L3, a ratio of an average of L2 to an average of L1, (average of L2)/(average of L1), is 1.5 or more and 8 or less, the average of L1 is 1.0 µm or more and 10 µm or less, an average of L3 is 3 µm or more and less than 80 µm, and an average of L3 is larger than the average of L2,
the surface treatment agent includes a silane coupling agent, and
a proportion of the coating film in the glass filler is 0.05 mass% or more and 2.5 mass% or less.

2. The glass filler according to claim 1, wherein the surface treatment agent further includes a resin.

3. The glass filler according to claim 2, wherein the resin includes a glycidyl group-containing resin.

4. The glass filler according to claim 3, wherein the resin is the glycidyl group-containing resin.

5. The glass filler according to claim 2, wherein the resin includes a urethane resin.

6. The glass filler according to claim 5, wherein the resin is the urethane resin.

7. The glass filler according to any one of claims 1 to 6, wherein the glass substrate includes a glass composition including the following components in mass%:
52 ≤ SiO₂ ≤ 56;
12 ≤ Al₂O₃ ≤ 16;
16 ≤ CaO ≤ 25;
0 ≤ MgO ≤ 6;
0 ≤ Na₂O + K₂O ≤ 2;
5 ≤ B₂O₃ ≤ 13; and
0 ≤ F₂ ≤ 0.5.

8. The glass filler according to any one of claims 1 to 6, wherein the glass substrate includes a glass composition including the following components in mass%:
50 ≤ SiO₂ ≤ 54;
25 ≤ B₂O₃ ≤ 30;
12 ≤ Al₂O₃ ≤ 15;
0.5 ≤ MgO ≤ 1.9;
3.0 ≤ CaO ≤ 5.5;
0 ≤ ZnO ≤ 3.5;
0.1 ≤ Li₂O ≤ 0.5; and
0.1 ≤ Na₂O ≤ 0.3, and
the glass composition has a permittivity of less than 5.0 at a frequency of 1 MHz.

9. The glass filler according to any one of claims 1 to 6, wherein
the glass substrate includes a glass composition including the following components in mass%:
50 ≤ SiO₂ ≤ 56;
20 ≤ B₂O₃ ≤ 30;
10 :5 Al₂O₃:5 20;
3.5 ≤ MgO + CaO ≤ 10; and
0 ≤ R₂O ≤ 1.0,
the glass composition further includes Fe₂O₃, and
the glass composition has a permittivity of less than 5.0 at a frequency of 1 MHz,
where R₂O is at least one oxide selected from the group consisting of Li₂O, Na₂O, and K₂O.

10. The glass filler according to any one of claims 1 to 6, wherein
the glass substrate includes a glass composition including the following components in mass%:
40 ≤ SiO₂ ≤ 60;
25 ≤ B₂O₃ ≤ 45;
5 ≤ Al₂O₃ ≤ 15;
0 < R₂O ≤ 5; and
0< RO < 15, and
the glass composition satisfies: SiO₂ + B₂O₃ ≥ 80; and/or SiO₂ + B₂O₃ ≥ 78 and 0 < RO < 10,
where R₂O is at least one oxide selected from the group consisting of Li₂O, Na₂O, and K₂O, and RO is at least one oxide selected from the group consisting of MgO, CaO, and SrO.

11. The glass filler according to any one of claims 1 to 6, wherein
the glass substrate includes a glass composition including the following components in mass%:
40 ≤ SiO₂ ≤ 60;
25 ≤ B₂O₃ ≤ 45;
0 < Al₂O₃ ≤ 18;
0 < R₂O ≤ 5; and
0 ≤ RO ≤ 12, and
in the glass composition, at least one of
i) SiO₂ + B₂O₃ ≥ 80 and SiO₂ + B₂O₃ + Al₂O₃ ≤ 99.9, and
ii) SiO₂ + B₂O₃ ≥ 78, SiO₂ + B₂O₃ + Al₂O₃ ≤ 99.9, and 0 < RO < 10 is established,
where R₂O is at least one oxide selected from the group consisting of Li₂O, Na₂O, and K₂O, and RO is at least one oxide selected from the group consisting of MgO, CaO, and SrO.

12. The glass filler according to any one of claims 1 to 6, wherein
the glass substrate includes a glass composition including the following components in mass%:
40 ≤ SiO₂ ≤ 60;
25 ≤ B₂O₃ ≤ 45;
0 < Al₂O₃ ≤ 18;
0 < R₂O ≤ 5; and
3 < RO < 8, and
in the glass composition, SiO₂ + B₂O₃ ≥ 75 and SiO₂ + B₂O₃ + Al₂O₃ < 97 are established,
where R₂O is at least one oxide selected from the group consisting of Li₂O, Na₂O, and K₂O, and RO is at least one oxide selected from the group consisting of MgO, CaO, and SrO.

13. The glass filler according to any one of claims 1 to 6, wherein
the glass substrate includes a glass composition in which SiO₂ + B₂O₃ ≥ 77 is established in mass%,
the glass composition has a permittivity of 4.4 or less at a frequency of 1 GHz, and
a temperature T2 at which a viscosity of the glass composition is 10² dPas is 1700°C or lower.

14. The glass filler according to any one of claims 1 to 6, wherein
the glass substrate includes a glass composition including the following components in mass%:
95 ≤ SiO₂ ≤ 99.5;
0 ≤ B₂O₃ ≤ 2;
0.01 ≤ Al₂O₃ ≤ 4;
0 ≤ R₂O ≤ 4;
0.01 ≤ RO' ≤ 4; and
0 ≤ TiO₂ ≤ 4,
where R₂O is at least one oxide selected from the group consisting of Li₂O, Na₂O, and K₂O, and RO' is at least one oxide selected from the group consisting of MgO, CaO, SrO, and ZnO.

15. The glass filler according to any one of claims 1 to 14, wherein the silane coupling agent has an amino group or a glycidyl group.

16. A resin composition comprising:
the glass filler according to any one of claims 1 to 15; and
a matrix resin.

17. The resin composition according to claim 16, wherein a proportion of the glass filler in the resin composition is 10 mass% or more and 70 mass% or less.

18. The resin composition according to claim 16 or 17, wherein the matrix resin is a thermoplastic resin.

19. The resin composition according to claim 18, wherein the thermoplastic resin is:
at least one selected from the group consisting of a polyolefin, a polyester, a polycarbonate, a polyvinyl chloride, a polystyrene, a polyamide, a polyphenylene sulfide, a polyphenylene ether, a polyetherketone, an acrylic resin, and a liquid crystal polymer; or
a copolymer or a polymer alloy including at least two selected from the group consisting of a polyolefin, a polyester, a polycarbonate, a polyvinyl chloride, a polystyrene, a polyamide, a polyphenylene sulfide, a polyphenylene ether, a polyetherketone, an acrylic resin, and a liquid crystal polymer.

20. The resin composition according to claim 18, wherein the thermoplastic resin includes a polyamide.

21. The resin composition according to claim 20, wherein the polyamide includes polyamide 66.

22. The resin composition according to claim 18, wherein the thermoplastic resin includes a thermoplastic polyester.

23. The resin composition according to claim 22, wherein the thermoplastic polyester includes polybutylene terephthalate.

24. The resin composition according to claim 18, wherein the thermoplastic resin includes a polycarbonate.
